# EUROPEAN PATENT SPECIFICATION

(11) **EP 3 652 841 B1**
(45) Date of publication and mention of the grant of the patent: **17.04.2024**
(21) Application number: 18733460.2
(22) Date of filing: 01.06.2018
(51) Int. Cl.: H02K 3/22, H02K 3/24, H02K 15/00

(54) **ASSEMBLY, WHICH IS NEW MANIFOLD CONNECTION, AND METHOD FOR CONNECTING ENDS OF GENERATOR STATOR COILS WITH MANIFOLD**
ANORDNUNG, DIE DER NEUE VERTEILERANSCHLUSS IST, UND VERFAHREN ZUR VERBINDUNG DER ENDEN VON GENERATORSTATORSPULEN MIT VERTEILER
ENSEMBLE, QUI EST UNE NOUVELLE CONNEXION AU COLLECTEUR, ET PROCÉDÉ POUR CONNECTER DES EXTRÉMITÉS DE BOBINES DE STATOR DE GÉNÉRATEUR AVEC UN COLLECTEUR

(30) Priority: 12.07.2017 US 201715647445
(43) Date of publication of application: 20.05.2020
(73) Proprietor: Siemens Energy, Inc., Orlando, FL 32826 (US)
(72) Inventor: DUNKEL, Stefan, 47665 Sonsbeck (DE); EBERHARDT, Nicholas, Oviedo Florida 32765 (US)
(74) Representative: Patentanwaltskanzlei WILHELM & BECK
(86) International application number: PCT/US2018/035643
(87) International publication number: WO 2019/013900

(56) References cited:
- EP-A2- 0 209 364
- BE-A- 665 782
- CN-A- 1 854 648
- DE-A1- 3 600 421
- JP-A- S5 866 556
- JP-A- H01 177 845
- KR-A- 20060 097 459
- US-A- 4 274 021
- US-A- 4 808 867
- US-A- 5 024 249
- US-A- 5 074 672

## Description

### TECHNICAL FIELD

The present invention relates generally to a retrofit assembly, i.e. new manifold connection, replacing an existing assembly, i.e. existing manifold connection, for connecting an end of a generator stator coil with a manifold during retrofitting of an existing generator. The present invention further relates to a method for retrofitting an existing assembly connecting an end of a generator stator coil with a manifold of the generator.

### DESCRIPTION OF RELATED ART

Generator is a component that converts mechanical power to electrical power in power generation industry. Generator typically includes a stator and a rotor each comprised of a plurality of electrical conductor coils. During generator operation, generator stator coils areneeded to be cooled to efficiently remove heat developed by electrical losses. Manifolds are arranged at ends of stator coils for supplying coolant. Ends of stator coils are connected to a manifold at inlet and to a manifold at outlet through hoses. The coolant includes liquid, such as water. The coolant is fed into one end of stator coils from a manifold at inlet and is collected into a manifold at outlet from an opposite end of stator coils. Such a cooling system is referred to as a single-pass system. Coolant temperatures are measured by thermal sensors at various locations to monitor operation of stator windings.

Generator stator coils are consisting of top stator coils and bottom stator coils. In some generator stator configurations, only one hose is connected to a manifold per pair of top stator coil and bottom stator coil at inlet and outlet respectively. End of the top stator coil and the bottom stator coil are including an end fitting to split the coolant from the one hose to the top stator coil and the bottom stator coil at the inlet and to merge the coolant from the top stator coil and the bottom stator coil into the one hose at the outlet. Thermal sensors mounted at outlet manifold only measure merged coolant temperature of top stator coils and the bottom stator coils. One sleeve connection is required on the manifolds at inlet and outlet respectively for connecting the one hose for such configurations.

In some generator stator configurations, two hoses are connected to a manifold per pair of top stator coil and bottom stator coil at inlet and outlet respectively. Coolant is fed into the top stator coil and the bottom stator coil separately through the two hoses. End fittings are not required at each end of the top stator coil and the bottom stator coil. However, twice of many sleeve connections are required on the manifold at inlet and outlet respectively for connecting the two separated hoses for such configurations.

During generator stator coil rewinding of an existing generator stator, design of the rewinding stator coils is different than the existing stator coils in the existing generator stator. In order to connect hoses between end of stator coils and manifold, either the existing manifold needs to be replaced to adapt the design of the rewinding stator coils, or the design of the rewinding stator coils needs to be changed to adapt the existing manifold. Either method results in significant financial and labor cost and time consuming.

Document US 5 074 672 A discloses an arrangement for monitoring temperature of water discharging from a plurality of water-cooled electric coils of an electric generatior. The arrangement includes a manifold, a plurality of hollow tubes, connected between the manifold and the respective electric coil, a plurality of temperature sensing assemblies, wherein each temperature sensing assembly includes an annular sleeve.

Document CN 1 854 648 A discloses a refrigerant distributing device for an air-conditioner. The device comprises an inlet pipe to supply a refrigerant, a distributor and a plurality of outlet pipes. The distributor comprises an inlet port connected with the inlet pipe, a mixing zone and a plurality of outlet ports. The plurality of outlet pipes connects at least one outlet port of the distributor.

Document JP S58 66556 A discloses a liquid-cooled rotating electric machine such as a stator-winding water-cooled turbine generator.

Document US 4 274 021 A discloses a liquid cooled stator winding of a rotary electric machine, comprising a stator bar which is composed of a plurality of hollow conductive elements and disposes within a slot of a stator core and a liquid coolant.

Document US 5 024 249 A discloses a one piece pipefitting cover for insulated Y-shaped joints, including strainers or lateral 45-Y fittings which is made of a flexible material.

Document EP 0 209 364 A2 discloses a diagnostic system for an electrical generator winding, which has first and second passages for conduction of cooling gas. The temperature of the gas exiting the passages is determined and converted to a normalized value which be either high, low or normal.

Document JP H01 177845 A discloses a stator winding water cooling device for a rotating electric machine, wherein a water passage is formed by an insulating tube connected to a section and a header provided between an external supply / drain pipe and the insulating tube and attached to a stator frame. A stator winding of a rotating electric machine, comprising: an insulating flange that insulates between the header and the external supply / drain pipe; and an insulator that insulates between the header and the stator frame.

Document BE 665 782 A discloses a dynamo-electric machine comprising an annular stator core, several stator windings, a source of cooling fluid, a metal collector at each end of each coil, each collector being connected to the source of cooling fluid, the conduits at each end of a coil being spaced apart and separately connected to a corresponding collector by means of electrically insulating and fluid-tight junctions, and independent means to make the connections between the winding conductors of the different windings.

Document US 4 808 867 A discloses a method and an apparatus for determining overheating in liquid-cooled windings of electric machines includes acoustically monitoring cooling liquid with at least one sound pickup, and detecting noises generated by bubbles in the event of local overheating if the boiling point of the cooling liquid is exceeded.

### SUMMARY OF INVENTION

The object of the present invention is met by the independent claims 1 and 8. Further preferred embodiments are part of the dependent claims.

Briefly described, aspects of the present invention relate to an assembly and a method for connecting ends of generator stator coils with a manifold.

According to the invention, a new manifold connection according to claim 1 is provided.

According to the invention, a method according to claim 8 for replacing an existing manifold connection with a new manifold connection according to claim 1 is provided.

Various aspects and embodiments of the application as described above and hereinafter not only be used in the combinations explicitly described, but also in other combinations. Modifications will occur to the skilled person upon reading and understanding of the description.

### BRIEF DESCRIPTION OF DRAWINGS

Exemplary embodiments of the application are explained in further detail with respect to the accompanying drawings. In the drawings:
FIG. 1 illustrates a schematic cross section view of a generator stator having an existing manifold connection;
FIG. 2 illustrates a schematic enlarged cross section view of the existing manifold connection shown in FIG. 1;
FIG. 3 illustrates a schematic cross section view of a generator stator having a manifold connection according to an embodiment of the invention;
FIGs. 4 and 5 illustrate schematic enlarged cross section views of a manifold connection according to various embodiments of the invention;
FIGs. 6A and 6B illustrate schematic perspective and cross section views of an adaptor according to an embodiment of the invention;
FIG. 7A and 7B illustrate schematic perspective and cross section views of an adaptor according to an alternative embodiment of the invention; and
FIG. 8A and 8B illustrate schematic perspective and cross section views of an adaptor according to a further alternative embodiment of the invention.

To facilitate understanding, identical reference numerals have been used, where possible, to designate identical elements that are common to the figures.

### DETAILED DESCRIPTION OF INVENTION

A detailed description related to aspects of the present invention is described hereafter with respect to the accompanying figures.

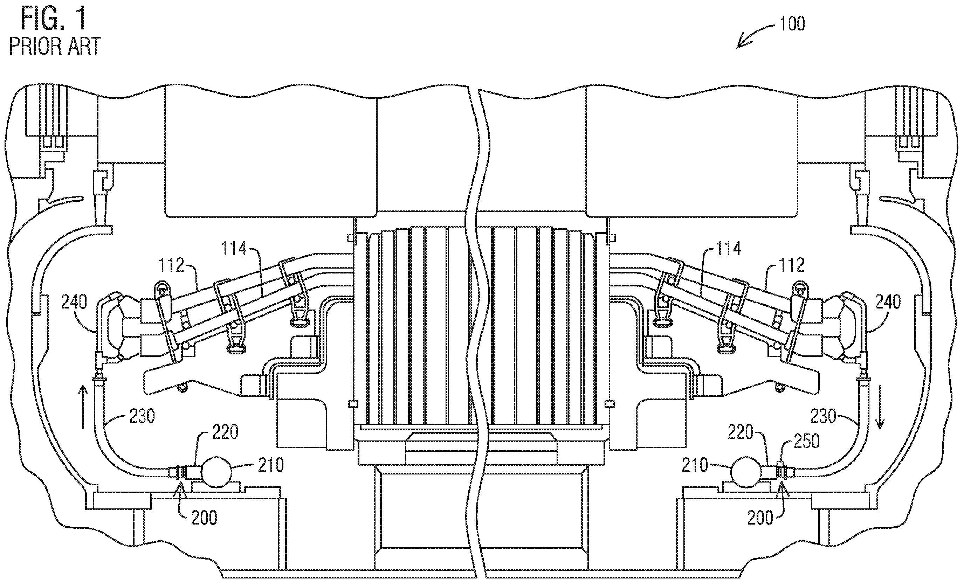

FIG. 1 illustrates a schematic cross section view of a generator stator 100 having an existing manifold connection 200. The generator stator 100 includes a top stator coil 112 and a bottom stator coil 114 passing through stator core slots (not shown) toward an inlet end side and an outlet end side. One manifold 210 is arranged at the inlet end side and another manifold 210 is arranged at the outlet end side. The manifolds 210 supply coolant for cooling the top stator coil 112 and the bottom stator coil 114. The manifolds 210 are made of stainless steel. A sleeve 220 is connected to each of the manifolds 210. The sleeve 220 are made of stainless steel. The sleeve 220 is welded to the manifold 210. As shown in FIG. 1, the existing manifold connection 200 includes one hose 230 connected to the sleeve 220 at the inlet end side and another hose 220 connected to the sleeve 220 at the outlet end side. The hose 230 is made of Teflon^{™}. An end fitting 240 is connected between the hose 230 and the end of the top stator coil 112 and the end of the bottom stator coil 114 at each end side. The end fitting 240 is a T-fitting. The coolant includes liquid, such as water.

As illustrated in FIG. 1 with the existing manifold connection 200, coolant flows out from the manifold 210 at the inlet end side and enters into the one hose 230 through the sleeve 220. The end fitting 240 at the inlet end side splits the coolant from the one hose 230 to two separate flow paths to the end of the top stator coil 112 and the end of the bottom stator coil 114 separately. The coolant flows through the top stator coil 112 and the bottom stator coil 114 separately from the inlet end side to the outlet end side. The end fitting 240 at the outlet end side mergers the coolant of the top stator coil 112 and the bottom stator coil 114 into one flow path to the one hose 230 at the outlet end side. The coolant flows into the manifold 210 at the outlet end side through the sleeve 220. A thermal sensor 250 is attached to the sleeve 220 at the outlet end side. The thermal sensor 250 measures temperature of the merged coolant from the top stator coil 112 and the bottom stator coil 114 at the outlet end side.

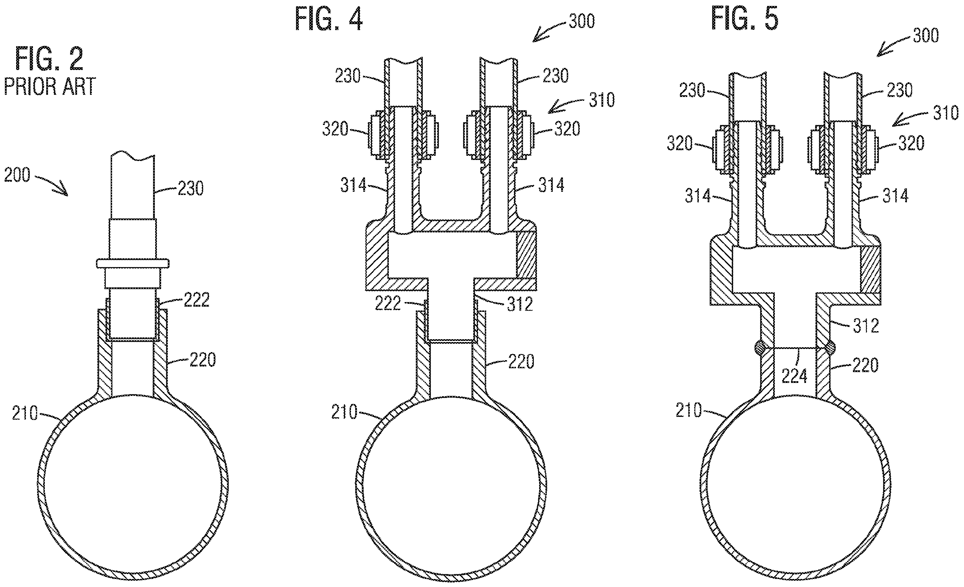

FI.G 2 illustrates a schematic enlarged cross section view of the existing manifold connection 200 shown in FIG. 1. With reference to FIG. 2, the sleeve 220 is welded to the manifold 210, such as by Tungsten Inert Gas welding. An insert 222 is attached to inside of the sleeve 220. The insert 222 is made of copper. The insert 222 is brazed into the sleeve 220. The hose 230 is connected to the sleeve 220 by inserting end of the hose 230 into the insert 222. Such a brazed joint hose connection develops leakage over time and causes corrosion.

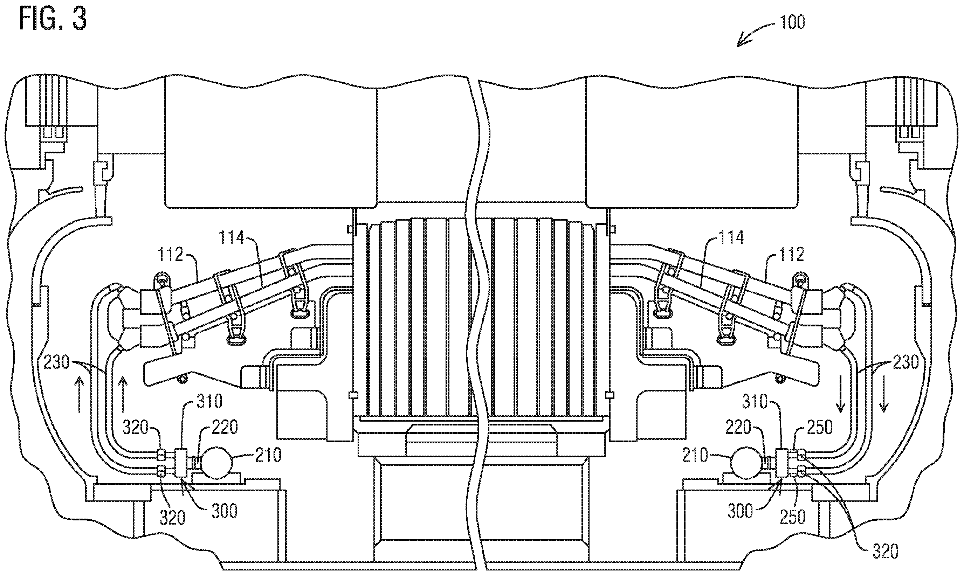

FIGs. 3-5 illustrate schematic cross section views of a generator stator 100 having a new manifold connection 300 according to embodiments of the invention. With reference to FIGs. 3-5, the new manifold connection 300 includes an adaptor 310. The adaptor 310 is arranged between the sleeve 220 and two hoses 230. The adaptor 310 is made of stainless steel. The adaptor 310 includes a sleeve connection conduit 312. The sleeve connection conduit 312 is attached to the sleeve 220. The adaptor 310 includes two hose connection conduits 314. Two hoses 230 is connected to the two hose connection conduits 314. The two hoses 230 are fixed to the two hose connection conduits 314 by clamps 320. Coolant leakage js to be prevented by fixing the two hoses 230 to the two hose connection conduits 314 using clamps 320. The two hoses 230 are fixed to the two hose connection conduits 314 by other fixing means, such as brazed joint hose connections.

According to an exemplary embodiment as illustrated in FIG. 3, coolant flows out from the manifold 210 at the inlet end side and enters into the adaptor 310 through the sleeve 220 and the sleeve connection conduit 312. The coolant flows into two hoses 230 through the two hose connection conduits 314 of the adaptor 310. The two separate hoses 230 connect to end of the top stator coils 112 and end of the bottom stator coils 114 separately. The coolant flows through the top stator coil 112 and the bottom stator coil 114 separately from the inlet end side to the outlet end side. The coolant enters into two hoses 230 from the top stator coils 112 and the bottom stator coils 114 at the outlet end side. The two separate hoses 230 are connected to two hose connection conduits 314 of an adaptor 310 at the outlet end side. The coolant flows into the adaptor 310 at the outlet end side through the two hoses 230 and the two connection conduits 314. Two thermal sensors 250 are respectively attached to the two hose connection conduits 314. The two thermal sensors 250 are attached to the two hose connection conduits 314 by tapes or epoxy resin. The two thermal sensors 250 measure temperature of coolant from the top stator coil 112 and temperature of coolant from the bottom stator coil 114 separately at the outlet end side. The coolant flows into the manifold 210 at the outlet end side through the sleeve 220 and the sleeve connection conduit 312 of the adaptor 310.

FIGs. 4-5 illustrate schematic enlarged cross section views of a new manifold connection 300 according to various embodiments of the invention. With reference to FIG. 4, the adaptor 310 is attached to the sleeve 220 by inserting the sleeve connection conduit 312 into the sleeve 220. The sleeve 220 has an insert 222. The insert 222 is brazed into the sleeve 220. The adaptor 310 is attached to the sleeve 220 by inserting the sleeve connection conduit 312 into the insert 222 of the sleeve 220. With reference to FIG. 5, the adaptor 310 is attached to the sleeve 220 by welding the sleeve connection conduit 312 to the sleeve 220 at location 224. The welding connection provides advantage of leakage protection.

According to the embodiments of the invention, the new manifold connection 300 using an adaptor 310 provides two separate hose conduit connections 314 from one single sleeve 220 connected to a manifold 210. The new manifold connection 300 allows two hoses 230 to be separately connected between the top stator coil 112 and the bottom stator coil 114 to a manifold 210 through one single sleeve 220. Temperatures of coolant flowing through the top stator coil 112 and the bottom stator coil 114 are measured separately by two separate thermal sensors 250 attached to the two separate hose conduit connections 314 of the adaptor 310. The new manifold connection 300 provides advantages of monitoring operation of a generation stator 100.

During generator stator coil rewinding of an existing generator stator 100, such as a generator stator 100 having a configuration shown in FIG. 1, design of the rewinding stator coils is different than an existing stator coils in the existing generator stator 100. According to aspects of the invention, an existing manifold connection 200 in the existing generator stator 100 is modified to the new manifold connection 300 so that ends of rewinding top stator coil 112 and rewinding bottom stator coil 114 are connected to an existing manifold 210. The modification includes removing the one hose 230 from the sleeve 220 in the existing manifold connection 200. Referring to FIG. 2 and FIG. 4, the hose 230 is removed from the insert 222 of the sleeve 220. The adaptor 310 is attached to the sleeve 220 by inserting the sleeve connection conduit 312 into the insert 222 of the sleeve 220. Referring to FIG. 2 and FIG. 5, the hose 230 is removed by cutting the sleeve 220 in the existing manifold connection 200 at a location 224 between the insert 222 and the manifold 210. The adaptor 310 is attached to the sleeve 220 by welding the sleeve connection conduit 312 to the sleeve 220 at the cutting location 224. The welding connection provides an advantage of leakage protection. The modification includes attaching an adaptor 310 to the sleeve 220 through a sleeve connection conduit 312. The modification includes connecting two hoses 230 to two hose connection conduits 314 of the adaptor 310. The two hoses 230 are connected to end of rewinding top stator coil 112 and end of rewinding bottom stator coil 114 separately.

According to aspects of the invention, an existing manifold connection 200 in an existing generator stator 100 is modified to the new manifold connection 300 so that existing top stator coil 112 and existing bottom stator coil 114 is connected to two hoses 230 separately. Two thermal sensors 250 are attached to the two hose connection conduits 314 of the adaptor 310 at an outlet side so that the coolant temperatures of the top stator coil 112 and the bottom stator coil 114 are measured independently. Referring to FIG. 1, the existing generator stator 100 includes end fittings 240 at end of the existing top stator coil 112 and end of the existing bottom stator coil 114. End fittings 240 are not needed with the new manifold connection 300 and are to be removed. Removal of end fittings 240 improves vibration behavior of top stator coil 112 and bottom stator coil 114.

According to the embodiments of the invention, modification of an existing manifold connection 200 using an adaptor 310 provides two separate hose conduit connections 314 from one single sleeve 220 connected to an existing manifold 210 without replacing the existing manifold 210, or without changing design of a generator stator coil during stator coil rewinding. The adaptor 310 provides two separate coolant flow paths from the one single sleeve 220 of the manifold 210 to the top stator coil 112 and the bottom stator coil 114 through the two hoses 230.

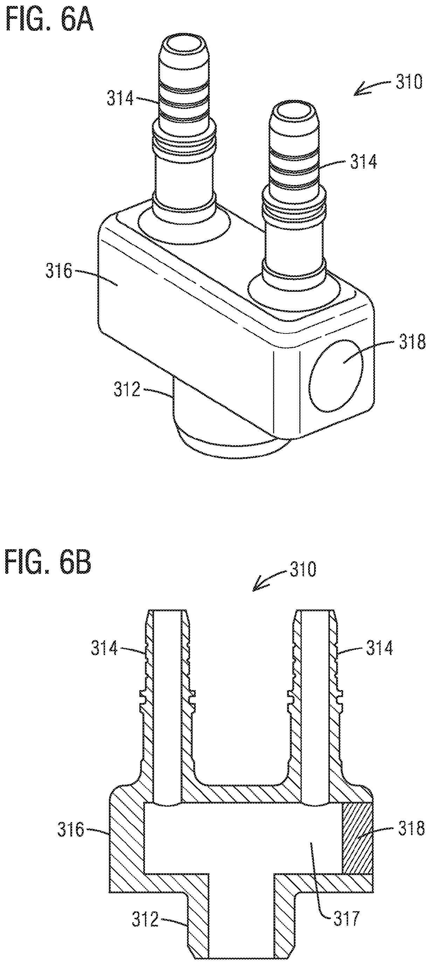

Various embodiments of an adaptor 310 are illustrated in FIGs. 6-8. With reference to FIGs. 6A and 6B, the adaptor 310 includes a chamber 316 between the sleeve connection conduit 312 and the two hose connection conduits 314. The sleeve connection conduit 312 is welded or machined to the chamber 316. The two hose connection conduits 314 are welded or machined to the chamber 316. The chamber 316 has a shape, such as a cuboid, a cube, a cone, a cylinder, or a sphere. In the exemplary embodiment as illustrated in FIGs. 6A and 6B, the chamber 316 has a square prism shape. The chamber 316 has a plenum 317 inside. The plenum 317 is drilled from one side of the chamber 316. A plug 318 is attached to the chamber 316 to seal the plenum 317.

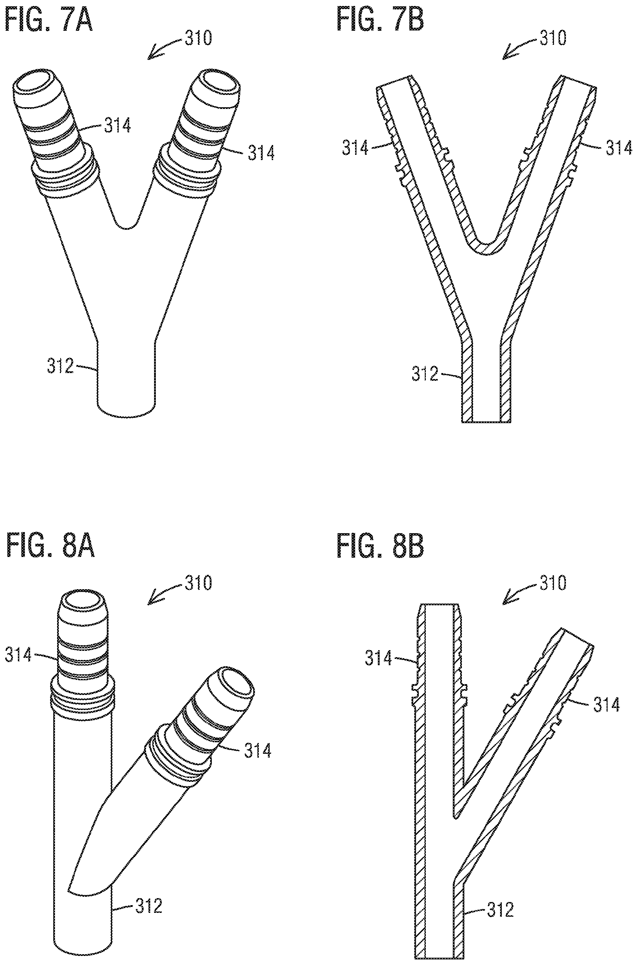

With reference to FIGs. 7A and 7B, the adaptor 310 has a Y-shape. The Y-shaped adaptor 310 has a sleeve connection conduit 312 and two hose connection conduits 314 symmetrically branching out from the sleeve connection conduit 312.

With reference to FIGs. 8A and 8B, the adaptor 310 has a Wye-shape. The Wye-shaped adaptor 310 has a sleeve connection conduit 312 and one hose connection conduit 314 straightly extending out from the sleeve connection conduit 312 and the other hose connection conduit 314 branching out from the sleeve connection conduit 312.

According to an aspect, the proposed manifold connection 300 connects two hoses 230 to one sleeve 220 of a manifold 210. The proposed manifold connection 300 allows connecting a stator coil having a different design to an existing manifold 210 during stator coil rewinding. The proposed manifold connection 300 provides a simple modification to resolve connection issues between generator stator coils and manifold 210 during stator coil rewinding, and thus significantly reduces cost during stator coil rewinding.

According to an aspect, the proposed manifold connection 300 replaces leak-prone brazed joint hose connection by welding and clamping.

According to an aspect, the proposed manifold connection 300 allows measuring coolant temperatures of the top stator coil 112 and the bottom stator coils 114 independently by attaching two thermal sensors 250 to two hose connection conduits 314 separately. The proposed manifold connection 300 provides better fault detection of stator coil without attaching additional thermal sensors between the top stator coils 112 and the bottom stator coils 114.

Although various embodiments that incorporate the teachings of the present invention have been shown and described in detail herein, those skilled in the art can readily devise many other varied embodiments that still incorporate these teachings. The scope of the protection for the present invention is defined solely by the appended claims. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass direct and indirect mountings, connections, supports, and couplings. Further, "connected" and "coupled" are not restricted to physical or mechanical connections or couplings.

### Reference List:

- 100:: Generator Stator
- 112:: Top Stator Coil
- 114:: Bottom Stator Coil
- 200:: Existing Manifold Connection
- 210:: Manifold
- 220:: Manifold Sleeve
- 222:: Sleeve Insert
- 224:: Sleeve Cutting Location
- 230:: Hose
- 240:: End Fitting
- 250:: Thermal Sensor
- 300:: New Manifold Connection of the Invention
- 310:: Adaptor
- 312:: Sleeve Connection Conduit
- 314:: Hose Connection Conduit
- 316:: Chamber
- 317:: Plenum
- 318:: Plug
- 320:: Clamp

## Claims

1. A new manifold connection (300) replacing an existing manifold connection (200) for connecting an end of a generator stator coil (112, 114) with a manifold (210) during retrofitting of an existing generator, the existing generator comprising:
- a radially outer top stator coil (112) and a radially inner bottom stator coil (114) passing through stator core slots toward an inlet end side and an outlet end side;
- one manifold (210) arranged at the inlet end side and another manifold (210) arranged at the outlet end side, the manifolds (210) supplying coolant for cooling the top stator coil (112) and the bottom stator coil (114);
- a sleeve (220) connected to each of the manifolds (210);
- the existing manifold connection (200), arranged in the inlet end side and in the outlet end side, said existing manifold connection (200) comprising:
- one hose (230) connected to the sleeve (220) at the inlet end side and another hose (230) connected to the sleeve (220) at the outlet end side;
- an end fitting (240) connected at each side between the hose (230) and an end of the top stator coil (112) and an end of the bottom stator coil (114), wherein coolant flows out from the manifold (210) at the inlet end side and enters into the one hose (230) through the sleeve (220), the end fitting (240) at the inlet end side splits the coolant from the one hose (230) to two separate flow paths to the end of the top stator coil (112) and the bottom stator coil (114) separately, the coolant flows through the top stator coil (112) and the bottom stator coil (114) separately from the inlet end side to the outlet end side, the end fitting (240) at the outlet end side mergers the coolant of the top stator coil (112) and the bottom stator coil (114) into one flow path to the one hose (230) at the outlet end side, the coolant flows into the manifold (210) at the outlet end side through the sleeve (220), wherein the new manifold connection (300) comprises:
- two hoses (230) replacing each of the one hoses (230) at the inlet end side and the outlet end side;
- an adaptor (310) configured to be attached on its one side to the sleeve of each of the manifolds (210), and on its other side to the two hoses, after disconnecting the one hose from each of the manifolds (210),
wherein the adaptor (310) comprises a sleeve connection conduit (312) configured to be attached to the sleeve (220), and wherein the adaptor (310) further comprises two hose connection conduits (314) connected to the two hoses (230);
wherein the two hoses (230) are configured to be connected to the end of the top stator coil (112) and the end of the bottom stator coil (114) respectively, after disconnecting the end fitting from the end of the top stator coil (112) and the end of the bottom stator coil (114) at the inlet end side and the outlet end side;
wherein the adaptor (310) is arranged between the sleeve (220) and the two hoses (230) for providing two separate coolant flow paths from the sleeve (220) connected to the manifold (210) to the top stator coil (112) and the bottom stator coil (114) through the two hoses (230); and
wherein the new manifold connection (300) further comprises a thermal sensor (250) attached to each of the two hose connection conduits (314) at the outlet end side, wherein the thermal sensors (250) are configured to measure a temperature of coolant from the top stator coil (112) and a temperature of coolant from the bottom stator coil (114) separately, and
wherein the above defined new manifold connection (300) is implemented without replacing the existing manifold (210) or without changing design of the generator stator coil during stator coil rewinding.

2. The new manifold connection (300) as claimed in claim 1, wherein the adaptor (310) is attached to the sleeve (220) by inserting into the sleeve (220) or by welding to the sleeve (220).

3. The new manifold connection (300) as claimed in claim 1 or 2, wherein the adaptor (310) further comprises a chamber (316) between the sleeve connection conduit (312) and the two hose connection conduits (314).

4. The new manifold connection (300) as claimed in claim 3, wherein the adaptor (310) further comprises a plug (318) to seal a plenum (317) inside the chamber (316).

5. The new manifold connection (300) as claimed in any of claims 1 to 2, wherein the adaptor (310) has a Y-shape with the two hose connection conduits (314) symmetrically branching out from the sleeve connection conduit (312).

6. The new manifold connection (300) as claimed in any of claims 1 to 2, wherein the adaptor (310) has a Wye-shape with one hose connection conduit (314) straightly extending out from the sleeve connection conduit (312) and the other hose connection conduit (314) branching out from the sleeve connection conduit (312).

7. The new manifold connection (300) as claimed in any of claims 1 to 6, wherein the two thermal sensors (250) are attached to the two hose connection conduits (314) of the adaptor (310) respectively.

8. A method for replacing an existing manifold connection (200) connecting an end of a generator stator coil (112, 114) with a manifold (210) of the generator by the new manifold connection (300) according to any of the claims 1 to 7, wherein the generator comprises:
- a radially outer top stator coil (112) and a radially inner bottom stator coil (114) passing through stator coil slots toward an inlet end side and an outlet end side;
- one manifold (210) arranged at the inlet end side and another manifold (210) arranged at the outlet end side, the manifolds (210) supplying coolant for cooling the top stator coil (112) and the bottom stator coil (114);
- a sleeve (220) connected to each of the manifolds (210);
- the existing manifold connection (200), arranged in the inlet end side and in the outlet end side, said existing manifold connection (200) comprising:
- one hose (230) connected to the sleeve (220) at the inlet end side and another hose (230) connected to the sleeve (220) at the outlet end side; and an end fitting (240) connected at each side between the hose (230) and an end of the top stator coil (112) and an end of the bottom stator coil (114), wherein coolant flows out from the manifold (210) at the inlet end side and enters into the one hose (230) through the sleeve (220), the end fitting (240) at the inlet end side splits the coolant from the one hose (230) to two separate flow paths to the end of the top stator coil (112) and the end of the bottom stator coil (114) separately, the coolant flows through the top stator coil (112) and the bottom stator coil (114) separately from the inlet end side to the outlet end side, the end fitting (240) at the outlet end side mergers the coolant of the top stator coil (112) and the bottom stator coil (114) into one flow path to the one hose (230) at the outlet end side, the coolant flows into the manifold (210) at the outlet end side through the sleeve (220), the method comprising:
- disconnecting the end fitting from the end of the top stator coil (112) and the end of the bottom stator coil (114) at the inlet end side and at the outlet end side;
- disconnecting the single hose (230) from each of the manifolds (210);
- attaching the adaptor (310) to the sleeve (220) of each of the manifolds (210),
wherein the adaptor (310) comprises the sleeve connection conduit (312) configured to be attached to the sleeve (220), and wherein the adaptor (310) further comprises two hose connection conduits (314);
- connecting the two hoses (230) between the two hose connection conduits (314) of the adaptor (310) and the end of the top stator coil (112) and the end of the bottom stator coil (114) respectively;
wherein the adaptor (310) is arranged between the sleeve (220) and the two hoses (230) for providing two separate coolant flow paths from the sleeve (220) connected to the manifold (210) to the top stator coil (112) and the bottom stator coil (114) through the two hoses (230);
- attaching the thermal sensor (250) to each of the two hose connection conduits (314) at the outlet end side, wherein the thermal sensors (250) are configured to measure a temperature of coolant from the top stator coil (112) and a temperature of coolant from the bottom stator coil (114) separately, and
wherein the above defined modification is implemented without replacing the existing manifold (210) or without changing design of the generator stator coil during stator coil rewinding.

9. The method as claimed in claim 8, wherein the adaptor (310) is attached to the sleeve (220) by inserting into the sleeve (220) or by welding to the sleeve (220).

10. The method as claimed in claim 8 or 9, wherein the adaptor (310) further comprises a chamber (316) between the sleeve connection conduit (312) and the two hose connection conduits (314).

11. The method as claimed in claim 10, wherein the adaptor (310) further comprises a plug (318) to seal a plenum (317) inside the chamber (316).

12. The method as claimed in any of claims 8 to 9, wherein the adaptor (310) has a Y-shape with the two hose connection conduits (314) symmetrically branching out from the sleeve connection conduit (312).

13. The method as claimed in any of claims 8 to 9, wherein the adaptor (310) has a Wye-shape with one hose connection conduit (314) straightly extending out from the sleeve connection conduit (312) and the other hose connection conduit (314) branching out from the sleeve connection conduit (312).

14. The method as claimed in any of claims 8 to 13, further comprising attaching the two thermal sensors (250) to the two hose connection conduits (314) of the adaptor (310) respectively.

## Patentansprüche

1. Neuer Verteileranschluss (300), der einen bestehenden Verteileranschluss (200) zum Verbinden eines Endes einer Generatorstatorspule (112, 114) mit einem Verteiler (210) während der Nachrüstung eines bestehenden Generators auswechselt, wobei der bestehende Generator Folgendes umfasst:
- eine radial äußere obere Statorspule (112) und eine radial innere untere Statorspule (114), die durch Statorkernschlitze zu einer Einlassendseite und einer Auslassendseite führen;
- einen am Einlassende angeordneten Verteiler (210) und einen weiteren am Auslassende angeordneten Verteiler (210), wobei die Verteiler (210) Kühlmittel zum Kühlen der oberen Statorspule (112) und der unteren Statorspule (114) liefern;
- eine Muffe (220), die mit jedem der Verteiler (210) verbunden ist;
- den vorhandenen Verteileranschluss (200), der auf der Einlassendseite und auf der Auslassendseite angeordnet ist, wobei der bestehende Verteileranschluss (200) Folgendes umfasst:
- einen Schlauch (230), der auf der Einlassendseite mit der Muffe (220) verbunden ist, und einen weiteren Schlauch (230), der auf der Auslassendseite mit der Muffe (220) verbunden ist;
- eine Endarmatur (240), die an jeder Seite zwischen dem Schlauch (230) und einem Ende der oberen Statorspule (112) und einem Ende der unteren Statorspule (114) verbunden ist, wobei Kühlmittel aus dem Verteiler (210) an der Einlassendseite ausströmt und durch die Muffe (220) in den einen Schlauch (230) eintritt, die Endarmatur (240) an der Einlassendseite das Kühlmittel aus dem einen Schlauch (230) auf zwei getrennte Durchflusswege zum Ende der oberen Statorspule (112) und der unteren Statorspule (114) aufteilt, das Kühlmittel durch die obere Statorspule (112) und die untere Statorspule (114) getrennt von der Einlassendseite zur Auslassendseite fließt, die Endarmatur (240) an der Auslassendseite das Kühlmittel der oberen Statorspule (112) und der unteren Statorspule (114) in einen Durchflussweg zu dem einen Schlauch (230) an der Auslassendseite zusammenführt, das Kühlmittel in den Verteiler (210) an der Auslassendseite durch die Muffe (220) fließt, wobei der neue Verteileranschluss (300) Folgendes umfasst:
- zwei Schläuche (230), die jeden des einen Schlauchs (230) auf der Einlassendseite und der Auslassendseite ersetzen;
- einen Adapter (310), der dazu ausgelegt ist, an seiner einen Seite an der Muffe jedes der Verteiler (210) und an seiner anderen Seite an den zwei Schläuchen angebracht zu werden, nachdem der eine Schlauch von jedem der Verteiler (210) abgetrennt wurde,
wobei der Adapter (310) eine Muffenanschlussleitung (312) umfasst, die dazu ausgelegt ist, an der Muffe (220) angebracht zu werden, und wobei der Adapter (310) ferner zwei Schlauchanschlussleitungen (314) umfasst, die mit den beiden Schläuchen (230) verbunden sind;
wobei die zwei Schläuche (230) dazu ausgelegt sind, mit dem Ende der oberen Statorspule (112) bzw. dem Ende der unteren Statorspule (114) verbunden zu werden, nachdem die Endarmatur von dem Ende der oberen Statorspule (112) und dem Ende der unteren Statorspule (114) an der Einlassendseite und der Auslassendseite getrennt wurde;
wobei der Adapter (310) zwischen der Muffe (220) und den beiden Schläuchen (230) angeordnet ist, um zwei getrennte Wege für den Kühlmittelfluss aus der mit dem Verteiler (210) verbundenen Muffe (220) zur oberen Statorspule (112) und zur unteren Statorspule (114) durch die beiden Schläuche (230) vorzusehen; und
wobei der neue Verteileranschluss (300) ferner einen Wärmesensor (250) umfasst, der an jeder der zwei Schlauchanschlussleitungen (314) an der Auslassendseite angebracht ist, wobei die Wärmesensoren (250) dazu ausgelegt sind, eine Temperatur des Kühlmittels aus der oberen Statorspule (112) und eine Temperatur des Kühlmittels aus der unteren Statorspule (114) separat zu messen, und
wobei der oben definierte neue Verteileranschluss (300) implementiert wird, ohne den bestehenden Verteiler (210) zu ersetzen oder ohne die Konzeption der Statorspule des Generators während des Neuwickelns der Statorspule zu ändern.

2. Neuer Verteileranschluss (300) gemäß Anspruch 1, wobei der Adapter (310) an der Muffe (220) durch Einstecken in die Muffe (220) oder durch Schweißen an der Muffe (220) angebracht ist.

3. Neuer Verteileranschluss (300) gemäß Anspruch 1 oder 2, wobei der Adapter (310) ferner eine Kammer (316) zwischen der Muffenanschlussleitung (312) und den zwei Schlauchanschlussleitungen (314) umfasst.

4. Neuer Verteileranschluss (300) gemäß Anspruch 3, wobei der Adapter (310) ferner einen Stopfen (318) zum Abdichten eines Plenums (317) innerhalb der Kammer (316) umfasst.

5. Neuer Verteileranschluss (300) gemäß einem der Ansprüche 1 bis 2, wobei der Adapter (310) eine Y-Form aufweist und die beiden Schlauchanschlussleitungen (314) symmetrisch von der Muffenanschlussleitung (312) abzweigen.

6. Neuer Verteileranschluss (300) gemäß einem der Ansprüche 1 bis 2, wobei der Adapter (310) eine Abzweigform aufweist, wobei eine Schlauchanschlussleitung (314) sich gerade von der Muffenanschlussleitung (312) aus erstreckt und die andere Schlauchanschlussleitung (314) von der Muffenanschlussleitung (312) abzweigt.

7. Neuer Verteileranschluss (300) gemäß einem der Ansprüche 1 bis 6, wobei die zwei Wärmesensoren (250) jeweils an den zwei Schlauchanschlussleitungen (314) des Adapters (310) angebracht sind.

8. Verfahren zum Ersetzen eines bestehenden Verteileranschlusses (200), der ein Ende einer Generatorstatorspule (112, 114) mit einem Verteiler (210) des Generators verbindet, durch den neuen Verteileranschluss (300) gemäß einem der Ansprüche 1 bis 7, wobei der Generator Folgendes umfasst:
- eine radial äußere obere Statorspule (112) und eine radial innere untere Statorspule (114), die durch Statorspulenschlitze zu einer Einlassendseite und einer Auslassendseite führen;
- einen am Einlassende angeordneten Verteiler (210) und einen weiteren am Auslassende angeordneten Verteiler (210), wobei die Verteiler (210) Kühlmittel zum Kühlen der oberen Statorspule (112) und der unteren Statorspule (114) liefern;
- eine Muffe (220), die mit jedem der Verteiler (210) verbunden ist;
- den vorhandenen Verteileranschluss (200), der auf der Einlassendseite und auf der Auslassendseite angeordnet ist, wobei der vorhandene Verteileranschluss (200) Folgendes umfasst:
- einen Schlauch (230), der mit der Muffe (220) an der Einlassendseite verbunden ist, und einen weiteren Schlauch (230), der mit der Muffe (220) an der Auslassendseite verbunden ist; und eine Endarmatur (240), die an jeder Seite zwischen dem Schlauch (230) und einem Ende der oberen Statorspule (112) und einem Ende der unteren Statorspule (114) angeschlossen ist, wobei Kühlmittel aus dem Verteiler (210) an der Einlassendseite ausströmt und in den einen Schlauch (230) durch die Muffe (220) eintritt, die Endarmatur (240) an der Einlassendseite das Kühlmittel aus dem einen Schlauch (230) auf zwei separate Durchflusswege zum Ende der oberen Statorspule (112) und zum Ende der unteren Statorspule (114) getrennt aufteilt, das Kühlmittel durch die obere Statorspule (112) und die untere Statorspule (114) getrennt von der Einlassendseite zur Auslassendseite fließt, die Endarmatur (240) an der Auslassendseite das Kühlmittel der oberen Statorspule (112) und der unteren Statorspule (114) in einen Durchflussweg zu dem einen Schlauch (230) an der Auslassendseite zusammenführt, das Kühlmittel in den Verteiler (210) an der Auslassendseite durch die Muffe (220) fließt, wobei das Verfahren Folgendes umfasst:
- Trennen der Endarmatur vom Ende der oberen Statorspule (112) und dem Ende der unteren Statorspule (114) an der Einlassendseite und an der Auslassendseite;
- Trennen des einzelnen Schlauchs (230) von jedem der Verteiler (210);
- Anbringen des Adapters (310) an der Muffe (220) jedes der Verteiler (210), wobei der Adapter (310) die Muffenanschlussleitung (312) umfasst, die dazu ausgelegt ist, an der Muffe (220) angebracht zu werden, und wobei der Adapter (310) ferner zwei Schlauchanschlussleitungen (314) umfasst;
- Anschließen der zwei Schläuche (230) zwischen den zwei Schlauchanschlussleitungen (314) des Adapters (310) und dem Ende der oberen Statorspule (112) bzw. dem Ende der unteren Statorspule (114);
wobei der Adapter (310) zwischen der Muffe (220) und den zwei Schläuchen (230) angeordnet ist, um zwei separate Wege für den Kühlmittelfluss aus der mit dem Verteiler (210) verbundenen Muffe (220) zur oberen Statorspule (112) und zur unteren Statorspule (114) durch die zwei Schläuche (230) vorzusehen;
- Anbringen des Wärmesensors (250) an jeder der zwei Schlauchanschlussleitungen (314) an der Auslassendseite, wobei die Wärmesensoren (250) dazu ausgelegt sind, eine Temperatur des Kühlmittels aus der oberen Statorspule (112) und eine Temperatur des Kühlmittels aus der unteren Statorspule (114) separat zu messen, und wobei die oben definierte Änderung implementiert wird, ohne den bestehenden Verteiler (210) auszutauschen oder ohne die Konstruktion der Generatorstatorspule während des Neuwickelns der Statorspule zu ändern.

9. Verfahren gemäß Anspruch 8, wobei der Adapter (310) an der Muffe (220) durch Einstecken in die Muffe (220) oder durch Schweißen an der Muffe (220) angebracht ist.

10. Verfahren gemäß Anspruch 8 oder 9, wobei der Adapter (310) ferner eine Kammer (316) zwischen der Muffenanschlussleitung (312) und den zwei Schlauchanschlussleitungen (314) umfasst.

11. Verfahren gemäß Anspruch 10, wobei der Adapter (310) ferner einen Stopfen (318) zum Abdichten eines Plenums (317) innerhalb der Kammer (316) umfasst.

12. Verfahren gemäß einem der Ansprüche 8 bis 9, wobei der Adapter (310) eine Y-Form aufweist und die zwei Schlauchanschlussleitungen (314) symmetrisch von der Muffenanschlussleitung (312) abzweigen.

13. Verfahren gemäß einem der Ansprüche 8 bis 9, wobei der Adapter (310) eine Abzweigform aufweist, wobei eine Schlauchanschlussleitung (314) sich gerade von der Muffenanschlussleitung (312) aus erstreckt und die andere Schlauchanschlussleitung (314) von der Muffenanschlussleitung (312) abzweigt.

14. Verfahren gemäß einem der Ansprüche 8 bis 13, ferner umfassend das Anbringen der zwei Wärmesensoren (250) jeweils an den zwei Schlauchanschlussleitungen (314) des Adapters (310).

## Revendications

1. Nouveau raccordement de collecteur (300) remplaçant un raccordement de collecteur existant (200) pour raccorder une extrémité d'une bobine de stator de générateur (112, 114) à un collecteur (210) pendant l'amélioration d'un générateur existant, le générateur existant comprenant :
- une bobine de stator radialement externe supérieure (112) et une bobine de stator radialement interne inférieure (114) traversant des fentes de noyau de stator vers un côté d'extrémité d'entrée et un côté d'extrémité de sortie ;
- un collecteur (210) agencé au niveau du côté d'extrémité d'entrée et un autre collecteur (210) agencé au niveau du côté d'extrémité de sortie, les collecteurs (210) fournissant un liquide de refroidissement pour refroidir la bobine de stator supérieure (112) et la bobine de stator inférieure (114) ;
- un manchon (220) raccordé à chacun des collecteurs (210) ;
- le raccordement de collecteur existant (200), agencé dans le côté d'extrémité d'entrée et dans le côté d'extrémité de sortie,
ledit raccordement de collecteur existant (200) comprenant :
- un tuyau (230) raccordé au manchon (220) au niveau du côté d'extrémité d'entrée et un autre tuyau (230) raccordé au manchon (220) au niveau du côté d'extrémité de sortie ;
- un raccord d'extrémité (240) raccordé au niveau de chaque côté entre le tuyau (230) et une extrémité de la bobine de stator supérieure (112) et une extrémité de la bobine de stator inférieure (114), dans lequel du liquide de refroidissement s'écoule hors du collecteur (210) au niveau du côté d'extrémité d'entrée et entre dans le tuyau (230) à travers le manchon (220), le raccord d'extrémité (240) au niveau du côté d'extrémité d'entrée divise le liquide de refroidissement provenant du tuyau (230) en deux trajets d'écoulement séparés vers l'extrémité de la bobine de stator supérieure (112) et de la bobine de stator inférieure (114) séparément, le liquide de refroidissement s'écoule à travers la bobine de stator supérieure (112) et la bobine de stator inférieure (114) séparément du côté d'extrémité d'entrée vers le côté d'extrémité de sortie, le raccord d'extrémité (240) au niveau du côté d'extrémité de sortie fusionne le liquide de refroidissement de la bobine de stator supérieure (112) et de la bobine de stator inférieure (114) en un trajet d'écoulement vers le tuyau (230) au niveau du côté d'extrémité de sortie, le liquide de refroidissement s'écoule dans le collecteur (210) au niveau du côté d'extrémité de sortie à travers le manchon (220), dans lequel le nouveau raccordement de collecteur (300) comprend :
- deux tuyaux (230) remplaçant chacun des tuyaux (230) au niveau du côté d'extrémité d'entrée et du côté d'extrémité de sortie ;
- un adaptateur (310) configuré pour être fixé sur l'un de ses côtés au manchon de chacun des collecteurs (210), et sur son autre côté aux deux tuyaux, après la disconnexion du tuyau de chacun des collecteurs (210),
dans lequel l'adaptateur (310) comprend un conduit de raccordement de manchon (312) configuré pour être fixé au manchon (220), et dans lequel l'adaptateur (310) comprend en outre deux conduits de raccordement de tuyau (314) raccordés aux deux tuyaux (230) ;
dans lequel les deux tuyaux (230) sont configurés pour être raccordés à l'extrémité de la bobine de stator supérieure (112) et à l'extrémité de la bobine de stator inférieure (114) respectivement, après la séparation du raccord d'extrémité de l'extrémité de la bobine de stator supérieure (112) et de l'extrémité de la bobine de stator inférieure (114) au niveau du côté d'extrémité d'entrée et du côté d'extrémité de sortie ; dans lequel l'adaptateur (310) est agencé entre le manchon (220) et les deux tuyaux (230) pour fournir deux trajets d'écoulement de liquide de refroidissement séparés du manchon (220) raccordé au collecteur (210) à la bobine de stator supérieure (112) et à la bobine de stator inférieure (114) à travers les deux tuyaux (230) ; et
dans lequel le nouveau raccordement de collecteur (300) comprend en outre un capteur thermique (250) fixé à chacun des deux conduits de raccordement de tuyau (314) au niveau du côté d'extrémité de sortie, dans lequel les capteurs thermiques (250) sont configurés pour mesurer une température de liquide de refroidissement provenant de la bobine de stator supérieure (112) et une température de liquide de refroidissement provenant de la bobine de stator inférieure (114) séparément, et
dans lequel le nouveau raccordement de collecteur (300) défini ci-dessus est mis en œuvre sans remplacer le collecteur existant (210) ou sans changer la conception de la bobine de stator de générateur pendant le rembobinage de bobine de stator.

2. Nouveau raccordement de collecteur (300) selon la revendication 1, dans lequel l'adaptateur (310) est fixé au manchon (220) par insertion dans le manchon (220) ou par soudage au manchon (220).

3. Nouveau raccordement de collecteur (300) selon la revendication 1 ou 2, dans lequel l'adaptateur (310) comprend en outre une chambre (316) entre le conduit de raccordement de manchon (312) et les deux conduits de raccordement de tuyau (314).

4. Nouveau raccordement de collecteur (300) selon la revendication 3, dans lequel l'adaptateur (310) comprend en outre un bouchon (318) pour sceller une enceinte de passage (317) à l'intérieur de la chambre (316).

5. Nouveau raccordement de collecteur (300) selon l'une quelconque des revendications 1 à 2, dans lequel l'adaptateur (310) a une forme en Y avec les deux conduits de raccordement de tuyau (314) se ramifiant symétriquement hors du conduit de raccordement de manchon (312).

6. Nouveau raccordement de collecteur (300) selon l'une quelconque des revendications 1 à 2, dans lequel l'adaptateur (310) a une forme en étoile avec un conduit de raccordement de tuyau (314) s'étendant en ligne droite hors du conduit de raccordement de manchon (312) et l'autre conduit de raccordement de tuyau (314) se ramifiant hors du conduit de raccordement de manchon (312).

7. Nouveau raccordement de collecteur (300) selon l'une quelconque des revendications 1 à 6, dans lequel les deux capteurs thermiques (250) sont fixés aux deux conduits de raccordement de tuyau (314) de l'adaptateur (310) respectivement.

8. Procédé de remplacement d'un raccordement de collecteur existant (200) raccordant une extrémité d'une bobine de stator de générateur (112, 114) avec un collecteur (210) du générateur par le nouveau raccordement de collecteur (300) selon l'une quelconque des revendications 1 à 7, dans lequel le générateur comprend :
- une bobine de stator radialement externe supérieure (112) et une bobine de stator radialement interne inférieure (114) traversant des fentes de bobine de stator vers un côté d'extrémité d'entrée et un côté d'extrémité de sortie ;
- un collecteur (210) agencé au niveau du côté d'extrémité d'entrée et un autre collecteur (210) agencé au niveau du côté d'extrémité de sortie, les collecteurs (210) fournissant du liquide de refroidissement pour refroidir la bobine de stator supérieure (112) et la bobine de stator inférieure (114) ;
- un manchon (220) raccordé à chacun des collecteurs (210);
- le raccordement de collecteur existant (200), agencé dans le côté d'extrémité d'entrée et dans le côté d'extrémité de sortie, ledit raccordement de collecteur existant (200) comprenant :
- un tuyau (230) raccordé au manchon (220) au niveau du côté d'extrémité d'entrée et un autre tuyau (230) raccordé au manchon (220) au niveau du côté d'extrémité de sortie ; et un raccord d'extrémité (240) raccordé au niveau de chaque côté entre le tuyau (230) et une extrémité de la bobine de stator supérieure (112) et une extrémité de la bobine de stator inférieure (114),
dans lequel du liquide de refroidissement s'écoule hors du collecteur (210) au niveau du côté d'extrémité d'entrée et entre dans le tuyau (230) à travers le manchon (220), le raccord d'extrémité (240) au niveau du côté d'extrémité d'entrée divise le liquide de refroidissement provenant du tuyau (230) en deux trajets d'écoulement séparés vers l'extrémité de la bobine de stator supérieure (112) et l'extrémité de la bobine de stator inférieure (114) séparément, le liquide de refroidissement s'écoule à travers la bobine de stator supérieure (112) et la bobine de stator inférieure (114) séparément du côté d'extrémité d'entrée vers le côté d'extrémité de sortie, le raccord d'extrémité (240) au niveau du côté d'extrémité de sortie fusionne le liquide de refroidissement de la bobine de stator supérieure (112) et de la bobine de stator inférieure (114) en un trajet d'écoulement vers le tuyau (230) au niveau du côté d'extrémité de sortie, le liquide de refroidissement s'écoule dans le collecteur (210) au niveau du côté d'extrémité de sortie à travers le manchon (220), le procédé comprenant :
- la séparation du raccord d'extrémité de l'extrémité de la bobine de stator supérieure (112) et de l'extrémité de la bobine de stator inférieure (114) au niveau du côté d'extrémité d'entrée et au niveau du côté d'extrémité de sortie ;
- la séparation du tuyau unique (230) de chacun des collecteurs (210) ;
- la fixation de l'adaptateur (310) au manchon (220) de chacun des collecteurs (210), dans lequel l'adaptateur (310) comprend le conduit de raccordement de manchon (312) configuré pour être fixé au manchon (220), et dans lequel l'adaptateur (310) comprend en outre deux conduits de raccordement de tuyau (314) ;
- le raccordement des deux tuyaux (230) entre les deux conduits de raccordement de tuyau (314) de l'adaptateur (310) et l'extrémité de la bobine de stator supérieure (112) et l'extrémité de la bobine de stator inférieure (114) respectivement ;
dans lequel l'adaptateur (310) est agencé entre le manchon (220) et les deux tuyaux (230) pour fournir deux trajets d'écoulement de liquide de refroidissement séparés du manchon (220) raccordé au collecteur (210) à la bobine de stator supérieure (112) et à la bobine de stator inférieure (114) à travers les deux tuyaux (230) ;
- la fixation du capteur thermique (250) à chacun des deux conduits de raccordement de tuyau (314) au niveau du côté d'extrémité de sortie, dans lequel les capteurs thermiques (250) sont configurés pour mesurer une température de liquide de refroidissement provenant de la bobine de stator supérieure (112) et une température de liquide de refroidissement provenant de la bobine de stator inférieure (114) séparément, et dans lequel la modification définie ci-dessus est mise en œuvre sans remplacer le collecteur existant (210) ou sans changer la conception de la bobine de stator de générateur pendant le rembobinage de bobine de stator.

9. Procédé selon la revendication 8, dans lequel l'adaptateur (310) est fixé au manchon (220) par insertion dans le manchon (220) ou par soudage au manchon (220).

10. Procédé selon la revendication 8 ou 9, dans lequel l'adaptateur (310) comprend en outre une chambre (316) entre le conduit de raccordement de manchon (312) et les deux conduits de raccordement de tuyau (314).

11. Procédé selon la revendication 10, dans lequel l'adaptateur (310) comprend en outre un bouchon (318) pour sceller une enceinte de passage (317) à l'intérieur de la chambre (316).

12. Procédé selon l'une quelconque des revendications 8 à 9, dans lequel l'adaptateur (310) a une forme en Y avec les deux conduits de raccordement de tuyau (314) se ramifiant symétriquement hors du conduit de raccordement de manchon (312).

13. Procédé selon l'une quelconque des revendications 8 à 9, dans lequel l'adaptateur (310) a une forme en étoile avec un conduit de raccordement de tuyau (314) s'étendant en ligne droite hors du conduit de raccordement de manchon (312) et l'autre conduit de raccordement de tuyau (314) se ramifiant hors du conduit de raccordement de manchon (312).

14. Procédé selon l'une quelconque des revendications 8 à 13, comprenant en outre la fixation des deux capteurs thermiques (250) aux deux conduits de raccordement de tuyau (314) de l'adaptateur (310) respectivement.
